# EUROPEAN PATENT SPECIFICATION

(11) **EP 1 959 238 B1**
(45) Date of publication and mention of the grant of the patent: **23.05.2018**
(21) Application number: 07003018.4
(22) Date of filing: 13.02.2007
(51) Int. Cl.: G01C 21/36, G06F 3/023, G06F 3/0338, G06F 3/0482

(54) **Method for inputting a destination in a navigation unit and nagivation system therefor**
Verfahren zur Eingabe eines Zielorts in eine Navigationseinheit und entsprechendes Navigationssystem
Procédé d'entrée d'une destination dans une unité de navigation et système de navigation correspondant

(43) Date of publication of application: 20.08.2008
(73) Proprietor: Harman Becker Automotive Systems GmbH, 76307 Karlsbad (DE)
(72) Inventor: Millington, Jeffrey A., Rochester Hills, MI 48306 (US)
(74) Representative: Bertsch, Florian Oliver

(56) References cited:
- EP-A1- 0 893 750
- US-A- 5 191 532
- ANONYMOUS: "Instructions for operating the Magellan RoadMate 360" INTERNET ARTICLE, [Online] 3 November 2006 (2006-11-03), XP002442158 Retrieved from the Internet: URL:http://web.archive.org/web/20061103142 429/http://www.magellangps.com/assets/manu als/MRM_360_en.pdf> [retrieved on 2007-07-11]

## Description

This invention relates to a method for inputting a destination in a navigation unit by manually controlling an actuating element and relates to a navigation system.

### Related Art

In nowadays' vehicles navigation systems are proliferating and are used for guiding the driver from the present vehicle position to a predetermined destination. In the art different ways of inputting destinations into the navigation system are known. First of all, it is possible to use a haptic actuating element which is used for manually inputting different characters and digits. In voice-controlled navigation systems it is also possible to utter a voice command containing the destination. In case of a manual input of a destination the steps required to enter a destination using a haptic input device often require inputting several characters to spell the desired street or city of the destination. The process of selecting each character can involve multiple button presses or multiple other activations of an actuating element. The amount of effort required to specify the street name, city name and house number is a larger percentage of the destination entry process time. The problem is that the organization of the speller has a direct impact on the number of steps needed to input the street name, city name or house number.

US 5,191,532 A1 discloses a navigation system in which a menu structure is used for inputting a destination. Different menu items including a character menu and a digit menu of the destination input interface of this navigation system can be selected using a touch panel or an actuator like a mouse. The "Instructions for Operating the Magellan RoadMate 360" user manual for the Magellan RoadMate describes a navigation device in which a main operation is controlled with a touch screen. This navigation device furthermore comprises actuating elements which can be used to move a user through a menu structure used on the display of the Magellan RoadMate. Different menu items also including a character menu and a digit menu of the destination input interface of this navigation device can be selected using the actuating elements.

### Summary of the Invention

Accordingly, the need exists to organize the inputting of a destination in such a way that the destination entry process time is minimized.

This need is met by the features of the independent claims. In the dependent claims preferred embodiments of the invention are described.

According to a first aspect of the invention, a method for inputting a destination in a navigation system is provided, wherein the destination is input by manually controlling an actuating element. At least the following menu items can be selected by actuating the actuating element in a first way. First of all, a CHARACTER menu item can be selected which, when it has been selected, provides a list of characters to be used for spelling the destination. Additionally, a DIGIT menu item can be selected which provides a list of digits when it has been selected. When the user has selected one of the menu items for selecting one of the elements from said list by actuating the actuating element in the first way, the other non-selected menu items can be selected by actuating the actuating element also in said first way. The organization of the different elements needed for spelling a destination helps to more quickly access the different elements needed for the spelling. In order to save time for the spelling process the different menu items can be selected by actuating the actuating element in said first way.

For additionally speeding up the spelling process the following additional menu items can also be selected by actuating the actuating element in the first way. In addition to the CHARACTER menu item and the DIGIT menu item a RECENT menu item can be provided which, when selected, provides a list of previously entered text. Furthermore, a MORE menu item can be provided which, when selected, provides a list of additional characters not contained in the list of characters of the CHARACTER menu item. According to one embodiment of the invention, when one of the CHARACTER or DIGIT menu items has been selected by the user by actuating the actuating element in the first way, the remaining menu items, i.e. the RECENT menu item, the MORE menu item and the CHARACTER menu item or the DIGIT menu item can be selected by actuating said actuating element in the first way. The additionally provided RECENT menu item helps to access previously entered destinations more easily. When a user wants to select a destination which he had already entered before, he or she simply has to actuate the actuating element in the first way for addressing the RECENT menu item. Furthermore, the MORE menu item can be provided giving access to a list of additional characters which were not contained in the CHARACTER menu item. By way of example, this MORE menu item may comprise a list of punctuation or accent characters or characters of other languages which are used less frequently.

Furthermore, a DONE menu item can be provided which can also be selected by actuating the actuating element in the first way wherein the selection of the DONE menu item allows the confirmation of the entered text. When the user has finished the spelling process or when the selected characters are such that only one possible destination out of a list of destinations is remaining, the step of inputting a destination can be terminated by accessing the DONE menu item.

For selecting the different CHARACTER menu items by actuating the actuating element in the first way the actuating element is configured in such a way that it can be moved in different directions in a plane. By way of example, when the user has selected one menu item, four other non-selected menu items are addressed by moving the actuating element in four different directions. It should be understood that the actuating element can also be configured in such a way that it can be moved within the plane in more than four directions.

According to the invention, the different menu items are shown on a display and the currently selected item, or an element of the corresponding list, is shown in a central part of the display. The other actually non-selected menu items can surround the currently selected item or element of the list of the selected item. The other non-selected items can be selected by moving the actuating element in the direction where the menu item is displayed. By this arrangement of the menu items on the display and by grouping the different elements in separated lists corresponding to different menu items, it is possible to quickly address an element of a list such as a character or a digit or a punctuation etc.

When one of the menu items has been selected by actuating the actuating element in the first way, the actuating element can also be actuated in a second way for selecting an element of the list of the selected menu item. Additionally, the actuating element can be configured in such a way that it is actuated in a third way for confirming selection made. As mentioned above, the first way of actuation is a movement in different directions within a plane. Preferably, the third way of actuating the actuating element corresponds to a movement of the actuating element which is essentially perpendicular to the plane defined by the first way of actuation. In this example, the third way of actuation may be an actuation parallel to an axis through which the actuating element is coupled to a front plate of the navigation system. This third way of actuation may normally correspond to a pressing action of the user. The second way of actuating the actuating element can be a rotational movement in the clockwise and counter-clockwise direction. By way of example, when a menu item has been selected by actuating the actuating element in the first way, an element of the list of the selected item can be selected by rotating the actuating element in different directions.

For the confirmation of the actuation in the first way two different possibilities exits. First of all, it is possible to configure the actuating element in such a way that the selection of one of the menu items by actuating the actuating element in the first way needs to be confirmed by actuating the actuating element in the third way, i.e. by pressing the actuating element. In other words, this embodiment requires a press of the actuating element as a confirmation. This method is more accidental press resistant. In the alternative, it is possible to configure the actuating element in such a way that it is only necessary to actuate the actuating element in the first way for initiating the selection without the need to additionally press a button.

When the CHARACTER or DIGIT menu item is selected, the menu items which are displayed and which can be selected by moving the actuating element, are the menu items RECENT, DONE, and MORE. Additionally, the menu item number 4 to be displayed can be the other of the two CHARACTER or DIGIT menu items not selected. With such an arrangement the different options and the different situations which can happen during the spelling of a destination can be accessed easily.

When a MORE menu item has been selected by actuating the actuating element in the first way, the following menu items may be displayed and can be selected by operating the operating element in the first way: a NEXT menu item containing a list of additional characters not contained in the CHARACTER menu item. A PREVIOUS menu item can be provided and displayed providing access to the previous list of characters. Furthermore, the CHARACTER menu item can be selected for returning to the first list of characters, and additionally the DONE menu item may be provided for terminating the selection.

According to another embodiment of the invention, when a menu item has been selected by actuating the actuating element in the first way, a starting element out of the list of elements of the selected menu item is displayed in a central part of the display, the other elements of said list being displayed around the central part. Depending on the number of other elements of the selected list, the other elements either completely surround the central part, or the other elements are only displayed in a certain region around the central part. Furthermore, the non-selected menu items are displayed around the central part. The non-selected menu items are displayed radially outside the other elements of the displayed list. This arrangement means that in the middle one element of the selected list is displayed. Around said list the other elements of said list can be displayed for selection by the user by rotating the actuating element. By moving the actuating element in the different directions within the plane, the menu items displayed radially outside the displayed list can be addressed.

Preferably, a list of elements is arranged in a square surrounding the central part. The different elements of the list can then be selected by rotating the actuating element either clockwise or counter-clockwise. However, any other form of arranging the element of the list is possible.

According to another aspect of the invention, the latter relates to a navigation system comprising the actuating element, a display displaying the different menu items which can be selected by actuating the actuating element in the first way, the display displaying at least the CHARACTER menu item and the DIGIT menu item. The system is now configured in such a way that, when one of the CHARACTER menu item and the DIGIT menu item is selected by actuating the actuating element in the first way, the display displays the other non-selected menu item, and the operating element is configured in such a way that this other non-selected menu item can be selected by actuating the actuating element in the first way.

For the first way of actuation the element can be a four-way actuating element adapted to be moved in four different directions in one plane. Furthermore, the actuating element can be pressed so that it moves perpendicular to the plane, the pressing normally being used for confirming a selection. Furthermore, the actuating element can be actuated in a third way namely by a rotation in the clockwise and counter-clockwise direction.

The navigation system furthermore comprises a display control unit controlling the positioning of the menu items on the display in such a way that an element of the list of the selected menu items is displayed in a central part of the display and that at least some of the non-selected menu items are displayed around the displayed element. Preferably, four non-selected menu items are displayed around the displayed element. These four menu items can be selected by moving the actuating element in four different directions. Furthermore, the display control unit controls the display in such a way that the other elements of the list of the selected menu items are displayed around the element in a square or in a circular shape. Additionally, the non-selected menu items can be displayed radially outside the other elements.

The navigation system described above preferably works as mentioned in connection with the above method for inputting a destination.

### Brief Description of the Drawings

In the following the invention will be explained in further detail with reference to the accompanying drawings, in which
Fig. 1 schematically shows a navigation system of the invention,
Fig. 2 shows in further detail an input unit of the navigation system comprising an actuating element for inputting a destination,
Fig. 3 shows a display when a CHARACTER menu item has been selected by the user,
Fig. 4 shows a display for inputting digits when a user has selected the DIGIT menu item,
Fig. 5 shows the display when the MORE menu item of Fig. 3 or 4 is selected, and
Fig. 6 shows a flowchart providing the steps for inputting a destination according to the invention.

### Detailed Description of the Preferred Embodiments

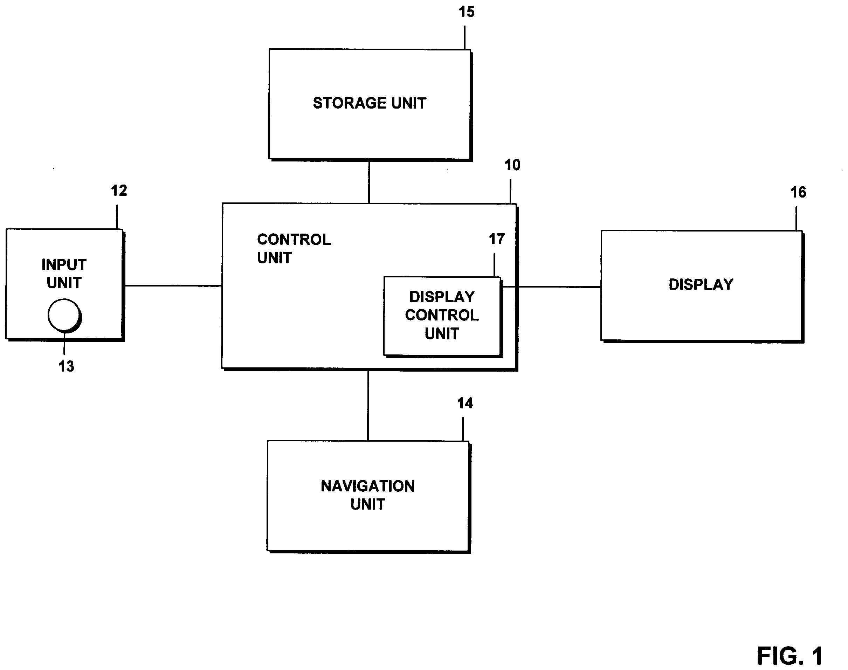

In Fig. 1 a navigation system according to the invention is described in more detail. In connection with Fig. 1 only the components necessary for understanding the present invention are described in more detail, other components commonly provided in navigation systems are not shown and are not explained in detail. Accordingly, it should be understood that the navigation system comprises many other units and features necessary for operating a navigation system.

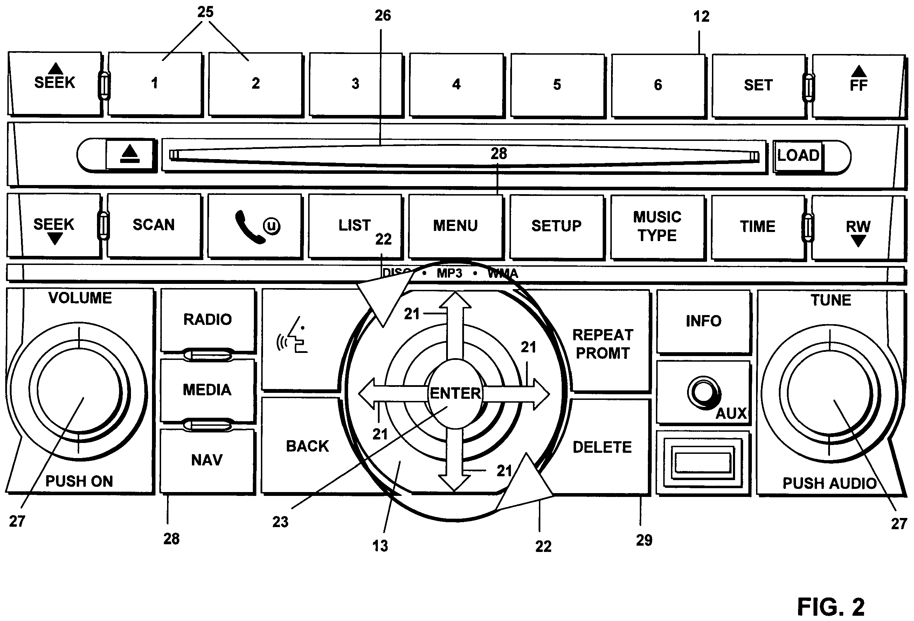

In the embodiment shown, a navigation system comprises a main control unit 10 controlling the overall functioning of the navigation system. The navigation system comprises an input unit on which several operating elements are provided for controlling the different operating modes of the navigation system. The face plate of the input unit 12 is shown in further detail in Fig. 2 and will be explained in detail later on. In the embodiment shown in Fig. 1 only an actuating element 13 is schematically shown representing the actuating element used for inputting the address of the destination. The system further comprises a navigation unit 14 in which, by way of example, a route from the present vehicle location to the destination input by the user can be calculated. In the storage unit 15 map data can be stored needed to calculate a route. Last but not least, a display 16 is provided informing the driver of the operating status of the navigation system. In the present context the display 16 is used for showing and selecting the different elements needed to input an address or a city.

In the control unit 10 a display control unit 17 is provided. The display control unit controls the way how the information is displayed to the user in response to the actuation of the actuating element 13 by the user.

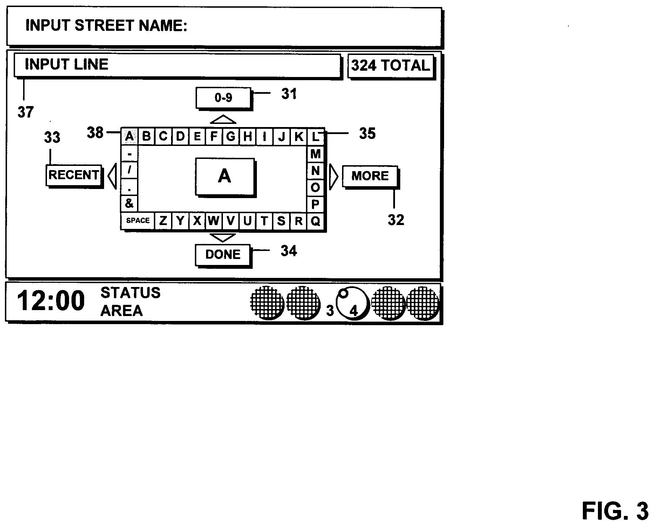

In Fig. 2 the face plate of the input unit 12 is shown in further detail. The input unit comprises the actuating element 13, the actuating element as shown in Fig. 2 being a four-way joystick with movements in the directions up, down, right and left as shown by the arrows 21. As will be explained later on in connection with Figs. 3-5 this way of actuating the actuating element corresponds to the first way of actuation. Additionally, it is possible to actuate the actuating element 13 in a second way as indicated by the arrows 22. The actuating element can be rotated either clockwise or counter-clockwise by 360°. Furthermore, as presented by the central part 23 indicated ENTER, the actuating element can be pressed by pushing the middle part as represented by the circle. The actuating element can either be a one-piece device allowing the three different ways of actuation as discussed above. Alternatively, it is also possible that the actuating element contains several separated pieces, by way of example, the four-way joystick for the movement in the four different directions, a center push button 23 and an outer ring allowing the rotation in a clockwise and counter-clockwise direction.

In the embodiment shown the navigation system is a multimedia electronic device as they are commonly used in nowadays' vehicles. This navigation system may comprise a radio module, an audio module, a telecommunication module etc. For controlling the different operating modes of the system a plurality of other buttons or hardkeys are provided, by way of example, buttons 25 on the upper edge of the face plate which can be used for selecting different radio stations or tracks on an audio or video disk which can be inserted into the system through the opening 26. Additionally, two turn-press buttons 27 can be provided which can be used for turning the system on, for controlling the volume, for tuning the radio receiver in case of a radio receiver operating mode. Additionally, several other buttons or hardkeys 28 can be provided. The use of these buttons is well-known in the art so that a detailed explanation of the different buttons is omitted.

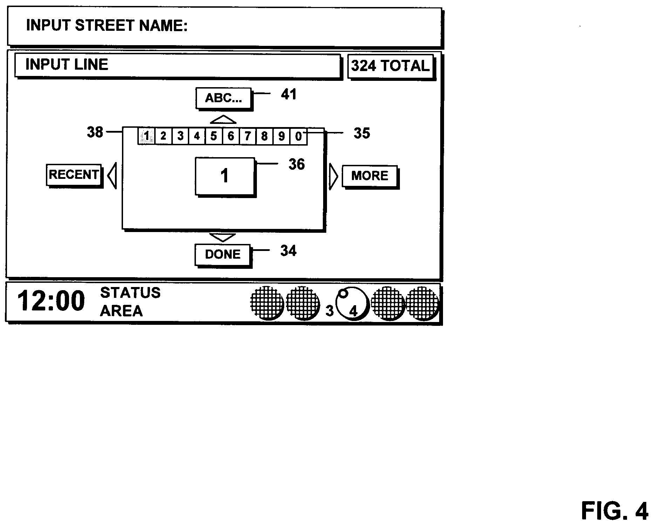

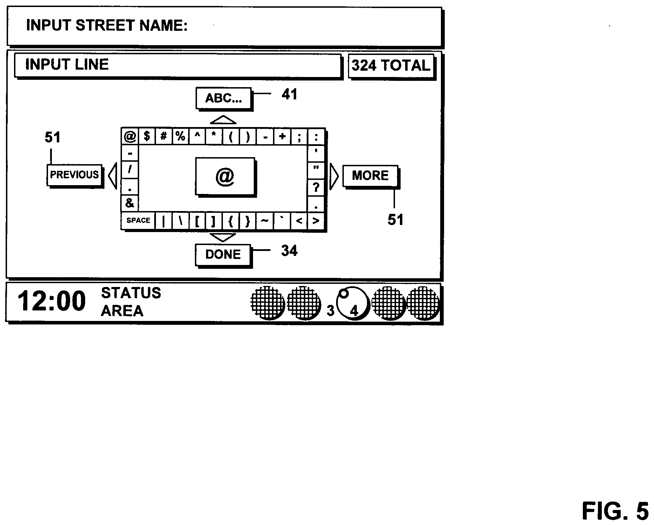

In connection with Figs. 3-5 the functioning of the method for inputting a destination using operation element 13 is explained in more detail. In most North American and European countries, the elements needed to input a destination include the alphabetical characters A-Z, the digits 0-9 and the remaining punctuation and accent characters. These elements can be, by way of example, represented by the ISO 8859 character set. In order to facilitate the spelling of a destination, the necessary elements can be divided into several groups represented by menu items shown on the display and which can be selected by the user by moving the operation element 13 in the first way, i.e. by moving the operating element up, down, to the left or to the right. In one embodiment of the invention the following different menu items can be provided for improving the spelling efficiency. First of all, a CHARACTER menu item shown with reference numeral 41 in Fig. 4 can be used, the CHARACTER menu item, when selected, giving access to the alphabetical characters and to other punctuation. By way of example, in Fig. 3 an example of a display is shown when the CHARACTER menu item has been selected by the user by moving the actuator element up, when the system is in an operating state as shown in Figs. 4 or 5.

In addition to the CHARACTER menu item a DIGIT menu item 31 can be provided which gives access to the digits from 0-9 as shown in further detail in Fig. 4. Due to the fact that the space is limited and that not all characters can be displayed when the CHARACTER menu item was selected, a MORE menu item 32 is provided as shown in Fig. 3, the MORE menu item giving access to the punctuation and accent characters or any other elements needed. An exemplary view of the display when the MORE menu item 32 was selected is shown in Fig. 5.

As shown in Figs. 3 and 4 a RECENT menu item 33 is provided. The RECENT menu item providing, when selected, a list of previously entered text appropriate to the speller in use. This could be a list of previously entered cities or destinations etc. Furthermore, a DONE menu item 34 can be provided which, when selected, allows the input completion of the currently entered text. Due to the fact that there exists a large variety of characters which may be needed for inputting a destination, the use of the CHARACTER menu item and the MORE menu item may not be enough to give access to all possible characters. The MORE menu item can give access to several lists which can be accessed by selecting the corresponding NEXT and PREVIOUS menu items 51 and 52 as shown in Fig. 5.

The different menu items can now be selected by moving the actuating element in the corresponding direction. By way of example, when the system is in an operating state as shown in Fig. 3 the digits can be accessed by moving the actuating element up, the RECENT menu item can be selected by moving the actuating element 13 to the left, the MORE menu item can be selected by moving the actuating element to the right. When the user wants to complete the entering of the destination, the user can move the actuating element down to access the DONE menu item. There exist two different possibilities for the selection of the menu item. In the first possibility, the actuating element has to be moved by firmly moving the element 13 in the corresponding direction. When the element 13 seldom experiences this inadvertent presses on element 23, it may be enough to simply move the operating element in the intended direction for selecting the menu item and for selecting a different display status. The other method is more accidental press resistant. In this embodiment a pressing of the ENTER button part is necessary for confirming the movement to the different direction.

As can be seen in Figs. 3-5 four different menu items are displayed in each operating state, and these four menu items can be addressed by moving the actuating element in the direction where the corresponding menu is displayed even if the PREVIOUS menu item of Fig. 5 may not always be accessible, e.g. when the user is in the first additional list of the MORE menu item. Once one of the menu items has been selected, the different elements contained in the list of said menu item are displayed in a square 38 as shown in connection with Figs. 3-5. As can be seen in these figures, the different elements are placed at the outer edge of the square. As can be seen in Figs. 3 and 5 the selected menu items comprise so many elements that the complete circumferential part of the square is filled with different elements 35. In the embodiment shown in Fig. 4 the selected menu item, the DIGIT menu item only comprises ten elements 35 so that not the complete circumference of the square is filled with elements.

When the user selects one of the menu items by moving the operating element in the different directions a first predetermined element is selected as starting element. This element is indicated in a central part 36 of the display in large letters. The other elements can now be accessed by rotating the actuating element 13. In the embodiment shown in Fig. 3 the list wraps indefinitely meaning that the cursor indicating the currently highlighted element moves in a continuous circle around the different elements 35.

When the system is in an operation mode as indicated in Fig. 3, the different characters can be selected by rotating the actuating element, the presently selected cursor being shown in area 36. A selection of a character can be confirmed by pressing the actuating element. The characters the selection of which was already confirmed can be displayed in another part 37 of the display.

In the embodiment shown, the different elements of the list are arranged in a square 38. However, it should be understood that any other form such as a circle or a triangle or polygon can be used for displaying the different elements. When the user is selecting different characters by rotating the actuating element 13, it is possible to change to the DIGIT menu item by simply moving it up in the embodiment shown in Fig. 3. In the embodiment shown in Fig. 3 showing the embodiment when the CHARACTER menu item was selected, four menu items (also named softkeys) are shown, the RECENT menu item, the DONE menu item, the MORE menu item and the DIGIT menu item. The RECENT menu item provides a list of previously used destinations, the DIGIT softkey provides access to the digits, the MORE softkey provides access to the punctuation and accent characters and the DONE softkey allows the input completion of the current entered text.

In Fig. 4 the embodiment is shown when the user has selected the DIGIT menu item shown in the upper part of the display in Fig. 3. In this case again a predetermined digit is shown in the central part 36 in large letters indicating the currently selected digit. The digits can be selected by rotating the actuating element. When the user wants to return to the CHARACTER menu item he has to move the actuating element up, for terminating the inputting of text he has to move the actuating element downward. For accessing the MORE menu item providing access to the punctuation and accent characters, a movement to the right is necessary. When the actuating element is moved to the left a list of previously entered destinations or text is accessed.

In Fig. 5 the display is shown when the user has selected the MORE menu item. This MORE menu item may comprise several lists of additional characters which can be accessed by moving the actuating element to the left or to the right for accessing the previous or the next list. The DONE menu item can be selected by a downward movement of the actuating element. When the user wants to return to the CHARACTER menu item 41 he has to move the actuating element up.

By way of example, the deletion of an entered character or any other confirmed element can be handled by pressing a hardkey DELETE 29 which may be provided on the face plate of the input unit as shown in Fig. 2.

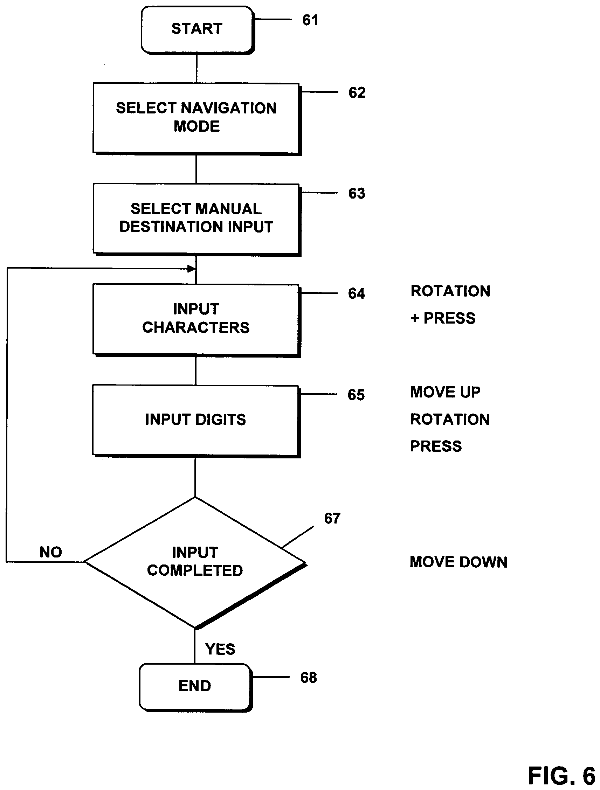

In Fig. 6 a flowchart is shown, summarizing the different steps needed to input a destination into a navigation system. On the right side of the flowchart the operating steps of the actuating element are also shown. The method starts in step 61. If the user wants to be guided to a predetermined destination the system has to switch to a navigation mode, which may be, by way of example, actuated by the user by actuating a hardkey on the face plate of the input unit (step 62). In a step 63 the navigation system has to be configured in such a way that a manual input of a destination is possible. This can be achieved in many different ways, either by selecting a menu item shown on the display or by pressing a hardkey or by any other method. In the next step 64 the actual spelling of the destination starts. The user starts to enter a street name or a city name. To this end, the user has to select the CHARACTER menu item which can be done in many different ways. Once the CHARACTER menu item has been selected different characters have to be input in step 64. This is achieved by rotating the actuating element 13 until the cursor highlighting the currently selected character reaches the intended character. In the embodiment shown in Fig. 3 the character A is currently selected. When the user wants to select the character G he may turn the actuating element to the right. When the character Z should be selected, it may be preferable to turn the actuating element in the counter-clockwise direction. Once the user has reached the intended character the selection of the character can be confirmed by pressing the actuating element. In the same way all the other characters can be selected. When the user now wants to input a digit, he can move the actuating element up in order to select the DIGIT menu item. Digits can be input in step 65 by rotating the actuating element and by pressing the actuating element for confirmation. In step 67 it is asked whether the input is completed. If not, the user can continue to input characters or any other elements. If the user wants to finish the spelling he can move the actuating element down so that the DONE menu item is selected indicating that the entering of text is completed. The method ends in step 68. The above-mentioned method and system for inputting a destination has the following advantages: First of all, the display is designed in such a way that the different possibilities are designed around the actuating element capabilities. It leverages the rotational and joystick motions for the selection of characters. It also provides rapid access to recently entered text, the full set of available characters and the completion of the entered text. In spellers of the prior art this involves traversing many characters to get access to these options.

The above-described implementation also has the advantage that in the alphabet menu item the digits and punctuation characters are accessible with a minimal number of keystrokes needed. The DIGIT menu item has minimal keystroke access to the CHARACTER menu item, punctuations and recent text input.

When navigation systems are reviewed one of the main categories considered for ease of use is destination entry. The above-described organization for character grouping an access using the actuating element permits a fast and easy input of the desired text. Accordingly, it improves the ease of use rating.

## Claims

1. Method for inputting a destination in a navigation system by manually controlling an actuating element (13), wherein at least the following menu items can be selected when the actuating element is actuated in a first way:
- a CHARACTER menu item (41), which, when selected, provides a list of characters,
- a DIGIT menu item (31) which, when selected, provides a list of digits,
wherein, when one of said menu items is selected for selecting one of the elements from the list by actuating the actuating element in said first way, the other non-selected menu item can be selected by actuating said actuating element in said first way, wherein said actuating element (13) is actuated in said first way by moving said actuating element in a plane in different directions, wherein the menu items are shown on a display (16) and the currently selected menu item is shown in a central part of the display, surrounded by other actually non-selected menu items, wherein one of the other actually non-selected menu items can be selected by moving said actuating element in the direction where said one other menu item is displayed, wherein, when one menu item has been selected, four other non-selected menu items can be selected by moving said actuating element in four different directions, wherein, when one of the menu items has been selected by actuating the actuating element in said first way, said actuating element can be actuated in a second way for selecting an element of said list of the selected menu item, by rotating said actuating element, wherein, when a menu item has been selected by actuating the actuating element in the first way, a starting element of said list of elements of the selected menu item is displayed in a central part of the display (16), the other elements of said list being displayed around said central part, wherein the non-selected menu items are displayed radially outside the other elements of said list displayed around the element displayed in the central part.

2. Method according to claim 1, wherein the following additional menu items can be selected by actuating said actuating element in said first way:
- a RECENT menu item (33) which, when selected, provides a list of previously entered text,
- a MORE menu item (32) which, when selected, provides a list of additional characters not contained in said CHARACTER menu item (41),
wherein, when one of the CHARACTER or DIGIT menu item (41, 31) has been selected, the remaining menu items can be selected by actuating said actuating element in said first way.

3. Method according to claim 1 or 2, wherein a DONE menu item (34) is additionally provided which can be selected by actuating said actuating element (13) in said first way, wherein the selection of said DONE menu item (34) allows the confirmation of the entered text.

4. Method according to claim 1, wherein the actuating element can be actuated in a third way for confirming a selection made by actuating the actuating element in the second way.

5. Method according to any of the preceding claims, wherein for the selection of one of the menu items only an actuation of the actuating element in said first way is necessary.

6. Method according to any of claims 1 to 4, wherein the selection of one of the menu items by actuating the actuating element in said first way has to be confirmed by actuating the actuating element in a way different to said first way of actuation.

7. Method according to claim 4, wherein for the third way of actuating the actuating element the actuating element is moved in a direction substantially perpendicular to the plane in which the actuating element is moved for the first way of actuation.

8. Method according to any of claims 2 to 7, wherein, when the MORE menu item (32) has been selected the following menu items can be selected by operating the operating element in the first way:
- a NEXT menu item containing a list of additional characters,
- the CHARACTER menu item (41), and
- the DONE menu item (34).

9. Navigation system comprising
- an actuating element (13) for manually inputting a destination,
- a display (16) displaying different menu items which can be selected by actuating said actuating element in a first way, the display displaying at least the following menu items:
- a CHARACTER menu item (41) which, when selected, provides a list of characters ,
- a DIGIT menu item (31) which, when selected, provides a list of digits, when one of said menu items is selected by actuating said actuating element in the first way, the display (16) displays the other non-selected menu item, wherein the operating element is configured in such a way that the other non-selected menu item can be selected by actuating said actuating element in said first way, wherein the actuating element is a four-way actuating element adapted to be moved in four different directions in a plane, **characterized by** further comprising a display control unit controlling the positioning of the menu items on the display in such a way, that an element of the list of the selected menu item is displayed in a central part of the display (16) and that at least some of the non-selected menu items are displayed around the displayed element, wherein one of the other actually non-selected menu items can be selected by moving said actuating element in the direction where said one other menu item is displayed, wherein, when one menu item has been selected, four other non-selected menu items can be selected by moving said actuating element in four different directions, wherein, when one of the menu items has been selected by actuating the actuating element in said first way, said actuating element can be actuated in a second way for selecting an element of said list of the selected menu item, by rotating said actuating element, wherein, when a menu item has been selected by actuating the actuating element in the first way, a starting element of said list of elements of the selected menu item is displayed in a central part of the display (16), the other elements of said list being displayed around said central part, wherein the non-selected menu items are displayed radially outside the other elements of said list displayed around the element displayed in the central part.

10. Navigation system according to claim 9, wherein the actuating element is adapted to be moved perpendicular to said plane for confirming a selection.

11. Navigation system according to claim 9 or 10, wherein the actuating element is adapted to be rotated clockwise and counter-clockwise.

12. Navigation system according to any of claims 9 to 11, wherein the display (16) is adapted to display at least some of the following menu items:
- a NEXT menu item which, when selected, provides a list of additional characters,
- a RECENT menu item (33) which, when selected, provides a list of previously entered text,
- a MORE menu item (32) which, when selected, provides a list of additional characters not contained in said CHARACTER menu item (41),
- a DONE menu item (34) which, when selected, confirms the entered text.

13. Navigation system according to any of claims 9 to 12, wherein the display (16) is adapted such that the other elements of the list of the selected menu items are displayed around the element displayed in the central part, some of the non-selected menu items being displayed radially outside the other elements.

14. Navigation system according to any of claims 9 to 13, adapted such that a destination can be manually input into the navigation system as described in a method mentioned in any of claims 2 to 8.

## Patentansprüche

1. Verfahren zum Eingeben eines Zielorts in ein Navigationssystem durch manuelles Steuern eines Betätigungselements (13), wobei wenigstens die folgenden Menüelemente ausgewählt werden, wenn das Betätigungselement auf eine erste Weise betätigt wird:
- ein Menüelement ZEICHEN (41), das bei Auswahl eine Liste von Zeichen bereitstellt,
- ein Menüelement ZIFFER (31), das bei Auswahl eine Liste von Ziffern bereitstellt, wobei, wenn eins der Menüelemente ausgewählt wird, um durch Betätigen des Betätigungselements auf die erste Weise eins der Elemente aus der Liste auszuwählen, das andere nicht ausgewählte Menüelement durch Betätigen des Betätigungselements auf die erste Weise ausgewählt werden kann, wobei das Betätigungselement (13) auf die erste Weise betätigt wird, indem das Betätigungselement in einer Ebene in unterschiedliche Richtungen bewegt wird, wobei die Menüelemente auf einer Anzeige (16) gezeigt werden und das derzeit ausgewählte Menüelement in einem mittleren Teil der Anzeige gezeigt wird, umgeben von anderen tatsächlich nicht ausgewählten Menüelementen, wobei eins der anderen tatsächlich nicht ausgewählten Menüelemente ausgewählt werden kann, indem das Betätigungselement in die Richtung bewegt wird, in der das eine andere Menüelement angezeigt wird, wobei, wenn ein Menüelement ausgewählt wurde, vier andere nicht ausgewählte Menüelemente ausgewählt werden können, indem das Betätigungselement in vier unterschiedliche Richtungen bewegt wird, wobei, wenn eins der Menüelemente durch Betätigen des Betätigungselements auf die erste Weise ausgewählt wurde, das Betätigungselement auf eine zweite Weise betätigt werden kann, um ein Element der Liste des ausgewählten Menüelements auszuwählen, indem das Betätigungselement gedreht wird, wobei, wenn ein Menüelement durch Betätigen des Betätigungselements auf die erste Weise ausgewählt wurde, ein Anfangselement der Liste von Elementen des ausgewählten Menüelements in einem mittleren Teil der Anzeige (16) angezeigt wird, während die anderen Elemente der Liste um den mittleren Teil herum angezeigt werden, wobei die nicht ausgewählten Menüelemente radial außerhalb der anderen Elemente der Liste angezeigt werden, die um das im mittleren Teil angezeigte Element herum angezeigt werden.

2. Verfahren nach Anspruch 1, wobei die folgenden weiteren Menüelemente durch Betätigen des Betätigungselements auf die erste Weise ausgewählt werden können:
- ein Menüelement LETZTE (33) das bei Auswahl eine Liste von zuvor eingegebenem Text bereitstellt,
- ein Menüelement MEHR (32), das bei Auswahl eine Liste weiterer Zeichen bereitstellt, die nicht im Menüelement ZEICHEN (41) enthalten sind, wobei, wenn eins der Menüelemente ZEICHEN oder ZIFFER (41, 31) ausgewählt wurde, die übrigen Menüelemente durch Betätigen des Betätigungselements auf die erste Weise ausgewählt werden können.

3. Verfahren nach Anspruch 1 oder 2, wobei außerdem ein Menüelement FERTIG (34) bereitgestellt ist, das ausgewählt werden kann, indem das Betätigungselement (13) auf die erste Weise betätigt wird, wobei die Auswahl des Menüelements FERTIG (34) die Bestätigung des eingegebenen Texts ermöglicht.

4. Verfahren nach Anspruch 1, wobei das Betätigungselement auf eine dritte Weise betätigt werden kann, um eine Auswahl zu bestätigen, die durch Betätigen des Betätigungselements auf die zweite Weise getroffen wurde.

5. Verfahren nach einem der vorangehenden Ansprüche, wobei für die Auswahl von einem der Menüelemente nur eine Betätigung des Betätigungselements auf die erste Weise nötig ist.

6. Verfahren nach einem der Ansprüche 1 bis 4, wobei die Auswahl eines der Menüelemente durch Betätigen des Betätigungselements auf die erste Weise durch Betätigen des Betätigungselements auf eine Weise, die sich von der ersten Betätigungsweise unterscheidet, bestätigt werden muss.

7. Verfahren nach Anspruch 4, wobei für die dritte Weise des Betätigens des Betätigungselements das Betätigungselement in eine Richtung bewegt wird, die im Wesentlichen senkrecht zu der Ebene ist, in der das Betätigungselement für die erste Betätigungsweise bewegt wird.

8. Verfahren nach einem der Ansprüche 2 bis 7, wobei bei Auswahl des Menüelements MEHR (32) die folgenden Menüelemente durch Bedienen des Bedienungselements auf die erste Weise ausgewählt werden können:
- ein Menüelement WEITER, das eine Liste zusätzlicher Zeichen enthält,
- das Menüelement ZEICHEN (41) und
- das Menüelement FERTIG (34).

9. Navigationssystem, umfassend
- ein Betätigungselement (13) zum manuellen Eingeben eines Zielorts,
- eine Anzeige (16), die unterschiedliche Menüelemente anzeigt, die durch Betätigen des Betätigungselements auf eine erste Weise ausgewählt werden können, wobei die Anzeige wenigstens die folgenden Menüelemente anzeigt:
- ein Menüelement ZEICHEN (41), das bei Auswahl eine Liste von Zeichen bereitstellt,
- ein Menüelement ZIFFER (31), das bei Auswahl eine Liste von Ziffern bereitstellt, wobei, wenn eins der Menüelemente ausgewählt wird, indem das Betätigungselement auf die erste Weise betätigt wird, die Anzeige (16) das andere nicht ausgewählte Menüelement anzeigt, wobei das Bedienungselement derart konfiguriert ist, dass das andere nicht ausgewählte Menüelement durch Betätigen des Betätigungselements auf die erste Weise ausgewählt werden kann, wobei das Betätigungselement ein Vier-Wege-Betätigungselement ist, das dazu angepasst ist, in einer Ebene in vier unterschiedliche Richtungen bewegt zu werden, **dadurch gekennzeichnet, dass** es ferner eine Anzeigesteuereinheit umfasst, die die Positionierung der Menüelemente auf der Anzeige in einer Weise steuert, dass ein Element der Liste des ausgewählten Menüelements in einem mittleren Teil der Anzeige (16) angezeigt wird und dass wenigstens einige der nicht ausgewählten Menüelemente um das angezeigte Element herum angezeigt werden, wobei eins der anderen tatsächlich nicht ausgewählten Menüelemente ausgewählt werden kann, indem das Betätigungselement in die Richtung bewegt wird, in der das eine andere Menüelement angezeigt wird, wobei, wenn ein Menüelement ausgewählt wurde, vier andere nicht ausgewählte Menüelemente ausgewählt werden können, indem das Betätigungselement in vier unterschiedliche Richtungen bewegt wird, wobei, wenn eins der Menüelemente durch Betätigen des Betätigungselements auf die erste Weise ausgewählt wurde, das Betätigungselement auf eine zweite Weise betätigt werden kann, um ein Element der Liste des ausgewählten Menüelements auszuwählen, indem das Betätigungselement gedreht wird, wobei, wenn ein Menüelement durch Betätigen des Betätigungselements auf die erste Weise ausgewählt wurde, ein Anfangselement der Liste von Elementen des ausgewählten Menüelements in einem mittleren Teil der Anzeige (16) angezeigt wird, während die anderen Elemente der Liste um den mittleren Teil herum angezeigt werden, wobei die nicht ausgewählten Menüelemente radial außerhalb der anderen Elemente der Liste angezeigt werden, die um das im mittleren Teil angezeigte Element herum angezeigt werden.

10. Navigationssystem nach Anspruch 9, wobei das Betätigungselement dazu angepasst ist, senkrecht zu der Ebene bewegt zu werden, um eine Auswahl zu bestätigen.

11. Navigationssystem nach Anspruch 9 oder 10, wobei das Betätigungselement dazu angepasst ist, im Uhrzeigersinn und entgegen dem Uhrzeigersinn gedreht zu werden.

12. Navigationssystem nach einem der Ansprüche 9 bis 11, wobei die Anzeige (16) dazu angepasst ist, wenigstens einige der folgenden Menüelemente anzuzeigen:
- ein Menüelement WEITER, das bei Auswahl eine Liste weiterer Zeichen bereitstellt,
- ein Menüelement LETZTE (33) das bei Auswahl eine Liste von zuvor eingegebenem Text bereitstellt,
- ein Menüelement MEHR (32), das bei Auswahl eine Liste weiterer Zeichen bereitstellt, die nicht im Menüelement ZEICHEN (41) enthalten sind,
- ein Menüelement FERTIG (34), das bei Auswahl den eingegebenen Text bestätigt.

13. Navigationssystem nach einem der Ansprüche 9 bis 12, wobei die Anzeige (16) derart angepasst ist, dass die anderen Elemente der Liste der ausgewählten Menüelemente um das Element herum angezeigt werden, das im mittleren Teil angezeigt wird, wobei einige der nicht ausgewählten Menüelemente radial außerhalb der anderen Elemente angezeigt werden.

14. Navigationssystem nach einem der Ansprüche 9 bis 13, das derart angepasst ist, dass ein Zielort manuell in das Navigationssystem eingegeben werden kann, wie in einem Verfahren aus einem der Ansprüche 2 bis 8 beschrieben.

## Revendications

1. Procédé pour entrer une destination dans un système de navigation en commandant manuellement un élément d'activation (13), dans lequel au moins les éléments de menu suivants peuvent être sélectionnés lorsque l'élément d'activation est activé d'une première manière :
- un élément de menu CHARACTER (41), qui, lorsqu'il est sélectionné, fournit une liste de caractères,
- un élément de menu DIGIT (31) qui, lorsqu'il est sélectionné, fournit une liste de chiffres, dans lequel, lorsqu'un desdits éléments de menu est sélectionné pour sélectionner un des éléments à partir de la liste en activant l'élément d'activation de ladite première manière, l'autre élément de menu non sélectionné peut être sélectionné en activant ledit élément d'activation de ladite première manière, dans lequel ledit élément d'activation (13) est activé de ladite première manière en déplaçant ledit élément d'activation dans un plan dans des directions différentes, dans lequel les éléments de menu sont montrés sur un écran (16) et l'élément de menu actuellement sélectionné est montré dans une partie centrale de l'écran, entouré par d'autres éléments de menus en fait non sélectionnés, dans lequel l'un des autres éléments de menu en fait non sélectionnés peut être sélectionné en déplaçant ledit élément d'activation dans la direction où ledit un autre élément de menu est affiché, dans lequel, lorsqu'un élément de menu a été sélectionné, quatre autres éléments de menu non sélectionnés peuvent être sélectionnés en déplaçant ledit élément d'activation dans quatre directions différentes, dans lequel, lorsqu'un des éléments de menu a été sélectionné en activant l'élément d'activation de ladite première manière, ledit élément d'activation peut être activé d'une deuxième manière pour sélectionner un élément de ladite liste de l'élément de menu sélectionné, en faisant tourner ledit élément d'activation, dans lequel, lorsqu'un élément de menu a été sélectionné en activant l'élément d'activation d'une première manière, un élément de début de ladite liste d'éléments de l'élément de menu sélectionné est affiché dans une partie centrale de l'écran (16), les autres éléments de ladite liste étant affichés autour de ladite partie centrale, dans lequel les éléments de menu non sélectionnés sont affichés radialement à l'extérieur des autres éléments de ladite liste affichés autour de l'élément affiché dans la partie centrale.

2. Procédé selon la revendication 1, dans lequel les éléments de menu additionnels suivants peuvent être sélectionnés en activant ledit élément d'activation de ladite première manière :
- un élément de menu RECENT (33) qui, lorsqu'il est sélectionné, fournit une liste de texte entré précédemment,
- un élément de menu MORE (32) qui, lorsqu'il est sélectionné, fournit une liste de caractères additionnels non contenus dans ledit élément de menu CHARACTER (41), dans lequel, lorsqu'un de l'élément de menu CHARACTER ou DIGIT (41, 31) a été sélectionné, les éléments de menu restants peuvent être sélectionnés en activant ledit élément d'activation de ladite première manière.

3. Procédé selon la revendication 1 ou 2, dans lequel un élément de menu DONE (34) est en outre fourni qui peut être sélectionné en activant ledit élément d'activation (13) de ladite première manière, dans lequel la sélection dudit élément de menu DONE (34) permet la confirmation du texte entré.

4. Procédé selon la revendication 1, dans lequel l'élément d'activation peut être activé d'une troisième manière pour confirmer une sélection faite en activant l'élément d'activation de la deuxième manière.

5. Procédé selon l'une quelconque des revendications précédentes, dans lequel pour la sélection d'un des éléments de menu uniquement une activation de l'élément d'activation de ladite première manière est nécessaire.

6. Procédé selon l'une quelconque des revendications 1 à 4, dans lequel la sélection d'un des éléments de menu en activant l'élément d'activation de ladite première manière doit être confirmée en activant l'élément d'activation d'une manière différente de ladite première manière d'activation.

7. Procédé selon la revendication 4, dans lequel pour la troisième manière d'activer l'élément d'activation l'élément d'activation est déplacé dans une direction sensiblement perpendiculaire au plan dans lequel l'élément d'activation est déplacé pour la première manière d'activation.

8. Procédé selon l'une quelconque des revendications 2 à 7, dans lequel, lorsque l'élément de menu MORE (32) a été sélectionné les éléments de menu suivants peuvent être sélectionnés en faisant fonctionner l'élément fonctionnel de la première manière :
- un élément de menu NEXT contenant une liste de caractères additionnels,
- l'élément de menu CHARACTER (41), et
- l'élément de menu DONE (34).

9. Système de navigation comprenant
- un élément d'activation (13) pour entrer manuellement une destination,
- un écran (16) affichant des éléments de menu différents qui peuvent être sélectionnés en activant ledit élément d'activation d'une première manière, l'écran affichant au moins les éléments de menu suivants :
- un élément de menu CHARACTER (41) qui, lorsqu'il est sélectionné, fournit une liste de caractères,
- un élément de menu DIGIT (31) qui, lorsqu'il est sélectionné, fournit une liste de chiffres, lorsqu'un desdits éléments de menu est sélectionné en activant ledit élément d'activation de la première manière, l'écran (16) affiche l'autre élément de menu non sélectionné, dans lequel l'élément fonctionnel est configuré de telle manière que l'autre élément de menu non sélectionné peut être sélectionné en activant ledit élément d'activation de ladite première manière, dans lequel l'élément d'activation est un élément d'activation à quatre voies adapté pour être déplacé dans quatre directions différentes dans un plan, **caractérisé en ce qu'**il comprend en outre une unité de commande d'affichage commandant le positionnement des éléments de menu sur l'écran de telle manière qu'un élément de la liste de l'élément de menu sélectionné est affiché dans une partie centrale de l'écran (16) et qu'au moins certains des éléments de menu non sélectionnés sont affichés autour de l'élément affiché, dans lequel un des autres éléments de menu en fait non sélectionnés peut être sélectionné en déplaçant ledit élément d'activation dans la direction où ledit un autre élément de menu est affiché, dans lequel lorsqu'un élément de menu a été sélectionné, quatre autres éléments de menu non sélectionnés peuvent être sélectionnés en déplaçant ledit élément d'activation dans quatre directions différentes, dans lequel, lorsqu'un des éléments de menu a été sélectionné en activant l'élément d'activation de ladite première manière, ledit élément d'activation peut être activé d'une deuxième manière pour sélectionner un élément de ladite liste de l'élément de menu sélectionné, en faisant tourner ledit élément d'activation, dans lequel, lorsqu'un élément de menu a été sélectionné en activant l'élément d'activation de la première façon, un élément de début de ladite liste d'éléments de l'élément de menu sélectionné est affiché dans une partie centrale de l'écran (16), les autres éléments de ladite liste étant affichés autour de ladite partie centrale, dans lequel les éléments de menu non sélectionnés sont affichés radialement à l'extérieur des autres éléments de ladite liste affichés autour de l'élément affiché dans la partie centrale.

10. Système de navigation selon la revendication 9, dans lequel l'élément d'activation est adapté pour être déplacé perpendiculairement audit plan pour confirmer une sélection.

11. Système de navigation selon la revendication 9 ou 10, dans lequel l'élément d'activation est adapté pour tourner dans le sens des aiguilles d'une montre et dans le sens inverse des aiguilles d'une montre.

12. Système de navigation selon l'une quelconque des revendications 9 à 11, dans lequel l'écran (16) est adapté pour afficher au moins certains des éléments de menu suivants :
- un élément de menu NEXT qui, lorsqu'il est sélectionné, fournit une liste de caractères additionnels,
- un élément de menu RECENT (33) qui, lorsqu'il est sélectionné, fournit une liste de texte entré précédemment,
- un élément de menu MORE (32) qui, lorsqu'il est sélectionné, fournit une liste de caractères additionnels non contenus dans ledit élément de menu CHARACTER (41),
- un élément de menu DONE (34) qui, lorsqu'il est sélectionné, confirme le texte entré.

13. Système de navigation selon l'une quelconque des revendications 9 à 12, dans lequel l'écran (16) est adapté de sorte que les autres éléments de la liste des éléments de menu sélectionnés sont affichés autour de l'élément affiché dans la partie centrale, certains des éléments de menu non sélectionnés étant affichés radialement à l'extérieur des autres éléments.

14. Système de navigation selon l'une quelconque des revendications 9 à 13, adapté de sorte qu'une destination peut être entrée manuellement dans le système de navigation comme décrit dans un procédé mentionné dans l'une quelconque des revendications 2 à 8.
